# EUROPEAN PATENT SPECIFICATION

(11) **EP 0 877 715 B1**
(45) Date of publication and mention of the grant of the patent: **28.05.2003**
(21) Application number: 97901649.0
(22) Date of filing: 30.01.1997
(51) Int. Cl.: C03B 23/025, C03B 29/08

(54) **CONTROL SYSTEM FOR HEATING IN A GLASS BENDING OVEN**
REGELSYSTEM ZUM HEIZEN EINES GLASBIEGEOFENS
SYSTEME DE COMMANDE DU CHAUFFAGE D'UN FOUR POUR CINTRER LE VERRE

(30) Priority: 30.01.1996 FI 960408
(43) Date of publication of application: 18.11.1998
(73) Proprietor: Glassrobots Oy, 33720 Tampere (FI)
(72) Inventor: LAMMI, Esa, FIN-36240 Kangasala (FI); LAMMI, Petri, FIN-33710 Tampere (FI)
(74) Representative: Nieminen, Taisto Tapani
(86) International application number: FI9700046
(87) International publication number: WO97028095

(56) References cited:
- WO-A-90/14315

## Description

The invention relates to a control system for heating of a multichamber oven used in glass bending, in which system the heating of the oven and glass is performed by heating elements placed in chambers and the bending of glass happens by means of gravitational force.

In known solutions a bending oven usually includes several preheating sections, possibly a prebending section and always the actual bending section. Typical solution is 10-15 heating sections. In every section there is a movable carriage, and in each of them can be equipped with a different type of glass meant to bend with it's mould. The line of carriages moves always one step forward when the glass in a bending section has reached the form corresponding the mould.

As an example of previous solutions can be referred a document WO-A1-9014315 which discloses an apparatus for processing glass sheets in a furnace. A glass sheet is conveyed into the furnace by a conveyor and heated in the furnace by heaters of which each heater is mounted to heat a certain conveyor area in the furnace. Said area have each a separate temperature sensor sensing the ambient temperature above each areas. Setpoint signals corresponding desired values of ambient temperature in each area has been previous defined. Thickness and color for example of the glass sheets are sensed by sensors and the setpoint signals for the tempeature sensor are changed accordingly.

Any glass sheet temperature are not sensed, wherein there is no possibility to adjust the glass temperature to follow any previous set target curve for obtaining the same bending temperature. Also the constant bending time is impossible to obtain, because the conveyor speed has been elected to be one of the adjustable bending parameters.

If every carriage has the same kind of mould and glass type meant to bend, a very simple control system of heating is sufficient. In every heating section there is a controller, the purpose of which is with on/off control of resistance elements to keep the temperature of air around the glass constant and after in advance fixed time to move the carriage line a step forward. A weekness of this method is that it does not suit well for 1-shift production, because the stability of the temperature in the oven is reached only after several operating hours and only then a sufficient recurrence can be reached.

The above mentioned fact can be problematic when there is a need for a short series production. In this case it would be advantageous to have a different kind of bendable glass in every carriage. The temperature level of the last preheating section should be set so low that even the glass which bends most easily, will not in any case have time to bend to it's final form totally. This naturally leads to that a considerably great increase in glass temperature has always to be done in the heating section, which in it's turn lowers capacity.

Traditionally in this kind of situation the final bending has been followed visually and necessary control measures of heating resistance field in bending section have been done manually. Naturally the result, in capacity as well as in quality, depends essentially on the professional skill of the operator.

The above mentioned problem has been tried to reduce by means of automation. Nowadays a well known technique is to use a pyrometer at least in the actual bending section, possibly also in the previous section, in order to continuosly measure the temperature of glass and on that basis to control by on/off control the functioning of heating elements by the aid of a computer. Also known is to share the heating elements to several parts in order to get more precise temperature distribution.

The purpose of this invention is to remove the problem of controlling which typically occurs during short production series, when the circumstances continuously change and demand controlling measures. The invention is characterized in the claims.

Due to the invention every glass of bendable glass type can have bending circumstances which are very close to each other and they can essentially be even the same. Even if heatings of bendable glasses of the same type would differ from each other in the first preheating sections, with the help of control system glasses have the same temperature distribution when they get into the bending section and glasses stay in the section in respect to each other the same period both in time and circumstances. With a control system according to this invention glasses of the same type can be bent to an identic form. Specially this is a condition in bending wind shields. When in the control system the length of the period has been programmed to be just the same for several different glass types the glass type can be changed to another right in the next vacated mould carriage by changing another mould to it during the period. At the same time the control system must be informed of the change of the glass type.

In the following the invention is described in detail with reference to the enclosed drawings, in which
Figure 1 shows a side view of a multichamber oven as a scheme.
Figure 2 shows warming curves of glass as a time function.
Figure 3 shows a control situation as a scheme.

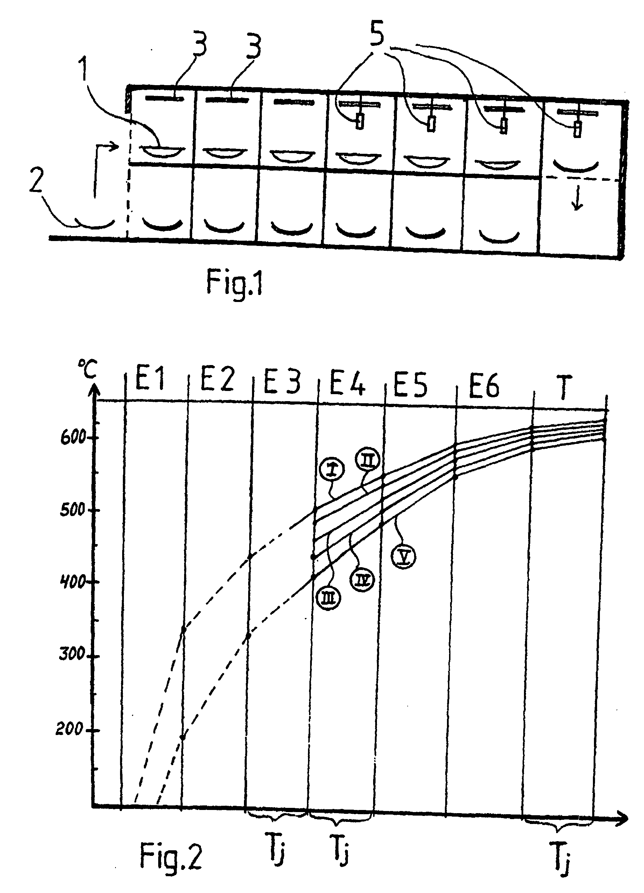

Figure 1 shows a side view of a multichamber bending oven, in which glasses 1 to be bent move along the upper line held by a mould 2 in special mould carriages through preheating sections E1 - E6 to bending section T. After the glass is bent the mould carriage is lowered to the lower line where the cooling sections are situated and finally the removing of the finished glass 1 and replacement of it by a new glass into a mould. Mould carriages move forward on the line one period at a time from section to another. The length of the period in time is Tj in all sections. In preheating sections E4 - E6 there is a pyrometer 5 as also in the bending section T and they are used for measuring the glass temperature at a certain in advance defined point of the glass.

Figure 2 shows as a scheme one of target curve groups I - V in heating control system. Each curve I - V corresponds to a certain degree of difficulty in bending. The curves are in the memory of the control system and they have been formed experimentally or formulated by an experienced glass bender. The length of the period Tj is the same with all target curves I - V. So the glass stays in every section time Tj. Glass types corresponding each target curve resemble one another in size and steepness of bending. Target curves I - V, as usually target curves of also other types of glasses, usually end to a different bending temperature, which typically varies between 590° - 625° C.

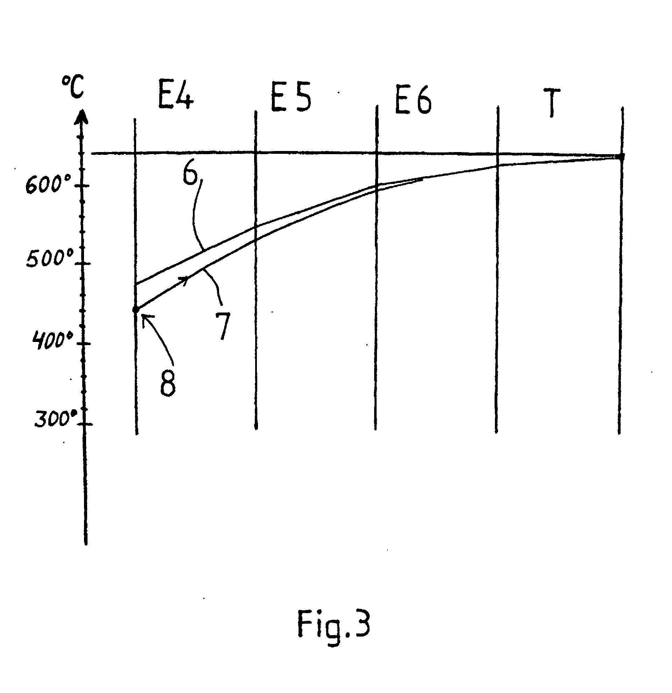

Figure 3 shows functioning of the control system according to the invention, which accordingly to the invention starts to operate when the glass comes to the first with a pyrometer equipped preheating section, which is shown by reference E4 in the embodiment. The Figure shows target curve 6 characteristic of a glass type and in Fig. 3 can be seen that the glass is appr. 30° C below the target curve when it comes to section E4. As control system works so called fuzzy control, which starts to raise glass temperature faster than it would rise according to the target curve, because the glass temperature is lower than target temperature.

Glasses under warming stay at the level of their target curves usually when of the heating capacity in the section is being used appr. 40 - 60%. Generally in preheating sections are used resistance patterns, in which case some of the elements are not at all turned on. In spite of this in each heating section E4 - T there is left power reserve so that the fuzzy control can raise the glass temperature to the level of target curve.

Controlling by fuzzy control is continuous and controlling includes measurement of the temperature of each glass in sections E4 - T, data transfer to the control system, a check of warming rate of the glass i.e. check of the slope of curve 7 and capacity control of resistance elements. The control system checks measuring points i.e. pyrometers f. ex. once in a second or f.ex. every third second. Capacity of resistance elements can be controlled even in such short periods when as the control system of capacity is used triac-control, in which case every separate element can get a different share of the voltage supplied in form of sine-waves. With this arrangement can be reached practically a steppless control of capasity.

A control system computer controls the rise of curve 7 in Fig. 3 so that curve 7 does not get up to the level of target curve 6 too soon. Getting up to the level of curve 6 can be reached f. ex. during the last but one period E6, most suitably in the end of it. This has significance also from the point of view of saving energy.

The control system has data of the approximate capacity which is needed for a glass type to reach a certain temperature rise rate. A controlled approach of the level of target curve is in that way easily possible with a simple with feedback equipped control by giving instructions of when the level of the target curve 6 should be reached. The so called fuzzy control follows a certain logic in approaching the level of target curve, as f.ex., that within a given approach time, f. ex. within 2,5 periods, curve 7 is raised essentially to the level of target curve 6 at even approach rate.

If the temperature of the glass is above the target curve 6 when coming into section E4, the control system reduces heating capacity so that the glass reaches the level of target curve at the latest in section E6.

With a control system according to the invention can be solved the previous problems in changing the bendable glass type, such as a need for circulating empty mould carriages in the oven and an unidentic bending between glasses, which is caused by, that glasses will stay in bending section different time periods. For this last one the reason has been that the temperature in the oven does not become even immediately in the beginning of the work or after the change of glass type. Also a change in circumstances outside the oven has effect on bending of a glass.

## Claims

1. A control system for heating glass sheets in a glass bending furnace comprising preheating sections (E1 - E6) equipped with heating elements (3) of which at least some are equipped with devices (5) measuring the glass temperature, a bending section (T), an arrangement for moving a mould (2) holding a glass sheet (1) through the preheating sections to the bending section where the glass sheet held by the mould is bent to the desired form by gravity after having reached the appropriate bending temperature, as well as control devices for controlling the heating capasity of the heating elements, **characterized in that** the control system comprises
- means for storing several temperature target curves (I - V) defined for glass sheets of different dimensions and compositions whereby at least some of the curves provide heating periods per section for the glass sheets, which have the same length of time (Tj),
- means for measuring the temperature of the glass sheets in the preheating sections (E4 - E6) where the system controls the capacity of the heating elements (3) in order to bring the temperature of the glass sheets nearer to the level of the corresponding temperature target curve (6),
- means for controlling the heating rate of the glass sheets moving through. one or more preheating sections so that glass sheets of the same type moving to the bending section (T) have essentially the same temperature in respect to each other,
- means for controlling the heating rate of the glass sheets in the bending section so as to arrive at a constant bending time (Tj) equal to the above lenght of time of heating periods per section, and depending on the sheet dimensions and glass compositions.

2. A control system according to claim 1 **characterized in that** the chosen heating element patterns utilized in the preheating sections and in the bending section take effect on each glass sheet for the same lenght of time (Tj) so that an identical temperature distribution can be achieved inside the glass sheets.

## Patentansprüche

1. Ein Steuersystem zur Heizung von Glasplatten in einem Glasbiegeofen bestehend aus Anwärmeabteilungen (E1-E6) einschließlich Heizelemente (3), von denen ein Teil Geräten (5) zum Messen der Glastemperatur hat, weiter aus einem Biegeabteilung (T) zur Bewegung einer Form (2), die die Glasplatte (1) durch Anwärmeabteilungen zu der Biegeabteilung trägt, wo die Glasplatte auf der Form, nach erreichen der nötigen Temperatur, in gewünschte Gestalt von Gravitation gebogen wird, sowie Steuerorganen zur Regelung der Wärmeleistung der Heizkörper, **gekennzeichnet dadurch, dass** das Regelsystem besteht aus:
- Mitteln zum Speichern von mehreren Zielkurven (I - V), definiert für verschiedene Dimensionen und Kompositionen, wobei wenigstens ein Teil der Kurven für Glasplatten mit Heizperioden gleicher Dauer (Tj) je Abteilung angepasst worden sind,
- Mitteln zum Messen der Temperatur für die Glasplatten in Anwärmeabteilungen (E4 - E6), wo die Wirkung der Heizkörper von dem System geregelt wird, um die Temperatur der Glasplatten möglichst nahe der Zielkurve (6) der entsprechenden Temperatur zu bringen,
- Mitteln zur Regelung des Wärmegrads der Glasplatten, die durch eine oder mehreren Anwärmeabteilungen bewegt werden, sodass ähnliche, zu der Biegeabteilung (T) kommende Glasplatten in Verhältnis zu einander eine wesentlich gleiche Temperatur haben,
- Mitteln zur Regelung des Wärmegrads der Glasplatten in der Biegeabteilung, um eine konstante Biegedauer zu erreichen, identisch zu der Dauer der Heizperiode je Abteilung, und abhängend von den Plattendimensionen und Glaskompositionen.

2. Ein Steuersystem gemäss Patentanspruch 1 **gekennzeichnet dadurch, dass** die für die Oberfläche des Heizkörpers gewählte Musterungen, die in den Anwärmeabteilungen und in den Biegeabteilungen benutzt werden, auf jede Glasplatte mit gleichem Dauer Tj wirken, damit eine identische Temperaturverteilung in die Glasplatten erzeugt werden kann.

## Revendications

1. Un système de contrôle de la température d'un four de bombage de feuilles de verre comprenant les sections de préchauffage (E1 - E6) munies d'éléments chauffants (3) dont au moins quelques uns sont équipés de dispositifs de mesure (5) pour la température du verre, une section de bombage (T) ainsi qu'un arrangement pour transférer un moule (2) qui porte la feuille de verre (1) à travers les sections de préchauffage jusqu'à la section de bombage où la feuille de verre portée par moule, après avoir atteint la bonne température, est bombée sous l'effet de la gravité jusqu'à ce qu'elle prenne la forme souhaitée, ainsi que des dispositifs de contrôle pour réguler la capacité de chauffage des éléments chauffants, **caractérisé en ce que** le système de contrôle comprend :
- des moyens pour enregistrer plusieurs courbes de température cibles (I - V) définies pour des feuilles de verre de dimensions et de compositions différentes, ce qui permet à quelques unes de courbes au moins de produire, en vue des feuilles de verre, des périodes de chauffage par section qui sont d'une même durée (Tj),
- des moyens pour mesurer la température des feuilles de verre dans les sections de préchauffage (E4 - E6) dans lesquelles le système contrôle la capacité des éléments chauffants (3) afin d'amener la température des feuilles de verre plus près du niveau qui correspond à la courbe de température cible (6),
- des moyens pour réguler la vitesse à laquelle sont chauffées les feuilles de verre traversant une ou plusieurs sections de préchauffage de façon à ce que les feuilles de même type allant vers la section de bombage (T) présentent essentiellement une même température l'une par rapport à l'autre.
- des moyens pour réguler la vitesse à laquelle sont chauffées les feuilles de verre dans la section de bombage de façon à assurer une durée de bombage constante (Tj), égale à la durée indiquée ci-dessus pour les périodes de chauffage par section, en fonction des dimensions de feuilles et de la composition du verre.

2. Un système de contrôle selon la revendication 1, **caractérisé en ce qu'**une géométrie est choisie selon laquelle les éléments chauffants sont utilisés dans les sections de préchauffage et dans la section de bombage et cette géométrie agit sur chaque feuille de verre pendant une même durée (Tj) de façon à obtenir une même distribution de température à l'intérieur des feuilles de verre.
